# EUROPEAN PATENT SPECIFICATION

(11) **EP 2 608 451 B1**
(45) Date of publication and mention of the grant of the patent: **13.12.2023**
(21) Application number: 11195630.6
(22) Date of filing: 23.12.2011
(51) Int. Cl.: H04L 41/22, H04L 41/12

(54) **Method and component for generating and monitoring of resource maps based on their affinities in a service-based industrial automation system**
Verfahren und Komponente zur Erzeugung und Überwachung von Ressourcenkarten auf Grundlage deren Affinitäten in einem dienstbasierten industriellen Automatisierungssystem
Procédé et composant pour la génération et la surveillance de cartes de ressources basées sur leurs affinités dans un système d'automatisation industrielle basé sur le service

(43) Date of publication of application: 26.06.2013
(73) Proprietor: SCHNEIDER ELECTRIC AUTOMATION GMBH, 97828 Marktheidenfeld (DE)
(72) Inventor: Mendes, Joao Marco, 4490-162 Ponte de Lima (PT); Colombo, Armando Walter, 26759 Hinte (DE)
(74) Representative: Stoffregen, Hans-Herbert

(56) References cited:
- EP-A2- 1 492 310
- US-A1- 2011 022 192
- THILO SAUTER ET AL: "How to Access Factory Floor Information Using Internet Technologies and Gateways", IEEE TRANSACTIONS ON INDUSTRIAL INFORMATICS, IEEE SERVICE CENTER, NEW YORK, NY, US, vol. 7, no. 4, 1 November 2011 (2011-11-01), pages 699-712, XP011362439, ISSN: 1551-3203, DOI: 10.1109/TII.2011.2166788
- LUCIANA MOREIRA SÃ DE SOUZA ET AL: "SOCRADES: A Web Service Based Shop Floor Integration Infrastructure", 26 March 2008 (2008-03-26), THE INTERNET OF THINGS; [LECTURE NOTES IN COMPUTER SCIENCE], SPRINGER BERLIN HEIDELBERG, BERLIN, HEIDELBERG, PAGE(S) 50 - 67, XP019087711, ISBN: 978-3-540-78730-3 * abstract * * paragraph [0002] * * paragraph [0003] * * paragraph [04.2] *
- GONÃ PRG ALO CANDIDO ET AL: "Service-Oriented Infrastructure to Support the Deployment of Evolvable Production Systems", IEEE TRANSACTIONS ON INDUSTRIAL INFORMATICS, IEEE SERVICE CENTER, NEW YORK, NY, US, vol. 7, no. 4, 1 November 2011 (2011-11-01), pages 759-767, XP011362443, ISSN: 1551-3203, DOI: 10.1109/TII.2011.2166779

## Description

### TECHNICAL FIELD

The invention relates to a method according to claim 1 and to a component according to claim 10.

G. Candido u. a.: Service-oriented Infrastructure to Support the Deployment of Evolvable Production Systems", IEEE, Vol. 7, No. 4, Nov. 2011, discloses a service-oriented architecture with a software component "device explorer" mostly used during analysis and monitoring of a service-oriented application. It comprises a perceptive HMI hat allows the integrator to search their network for available devices and services, check their status, visualize meta data or test available services. Based on device and service meta data, it would be possible to extract not only the physical network topologic but also the logical view of the system only based on local information. This can be presented either by a tree map or by a more complex graphical solution to provide a representation of the different logical levels of an application.

T. Sauter u. a.: "How to Access Factory Floor Information Using Internet Technologies and Gateways", IEEE, Vol. 7, No. 4, Nov. 2011, deals with information transfer in automation systems and the development of industrial communication networks focused on horizontal aspects by the provision of suitable automation networks on the various levels. Addionaly vertical integration concerning the interconnection of field-level networks and IP-based office type networks are discussed. According to SAUTER, such interconnection can reasonably by achieved via gateways. The paper reviews concepts and defines a set of criteria that are relevant for the design of such gateways.

L. M. Sá de Souza u. a.: "Sokrades: A Web Service based Shop Floor Integration Infrastcture" deals with service-oriented infrastructure, where complex processes will span over all types of systems - from the back and enterprise system down to a smart object. Sokrades provides generic components upon which sophisticated production processes can be modelled. The paper give a list of requirements, their design und the reference implementation of that integration architecture.

US 2011/0022192 A1 discloses systems, apparatuses and methods which are provided for and to managing and developing an industrial system included in the industrial environment. Intelligece related to a configuration of the industrial system is collected and consist to generate information related to operation conditions of the industrial system. Intelligence can be collected actively or passively: In active collection a platform that collects the intelligence retrieves configuration records from the industrial system, whereas in passive collection the platform received one or more configuration records form the industrial automation system.

EP 1492 310 A2 discloses an industrial equipment network, each piece of equipment is provided a dedicated controller for providing control and identification information and for being programmed to provide the interconnection and interaction of its associated piece of equipment with other equipment connected to the network, thereby permitting a SCADA system, via word casting from the controllers or polling the controllers to serve-configure itself to show a diagram on an entire equipment network and periodically update the diagram relative to changes thereto, and the status of the equipment on the network.

It is a technical problem of the invention to improve the inform about the generation of particular events in the system as well as affinities between them, that happen during operation of the different resources.

The problem is in one aspect solved by a method with features of claim 1.

The invention relates to an automatic and assisted method to generate resource maps based on custom affinities of resources that are described as service dependencies in a service-oriented industrial automation system a system for performing the method and a computer program product.

A resource mapping software component that is embedded in one or more hosting controllers is responsible to automate the process described by this invention, namely the detection of relevant co-related information to be logged and the generation of resource maps based on the affinity-configuration given by an user.

The problem is solved by a system with the features of claim 10.

The resulting resource maps have the objective to inform the user about the generation of particular events in the system as well as affinities between them, that happen during operation of the different mapped resources. Based on this information, the user can select time periods and affinities among series and events to be observed and possibly detect faulty operations, for example high energy consumption values related to some particular affinity between resources. It is also possible to track the origin of most of the events, performing event propagation analysis because relationships of any type that happen between resources are logged and mapped.

The idea is to track relationships (affinities) during runtime that happen between the resources in the system. These affinities, for example, may represent events that were not previously planned but did happen during the operation time. Using a generated map it is possible to check for a set of affinities that could lead to the unplanned event and thus, study its origin.

Affinities are relationships. Relationships are associated, among others, to structural and functional dependencies. Building maps of affinities means also building maps of dependencies. This is formally described as a sequential "Functional Composition" [F(x(y(z)))], (i.e., F applied to x, x applied to y and y applied to z). In the language of service-oriented systems, this functional composition can be addressed as "Sequential Mutual Orchestration", which will be completely based on event propagation with possible complex event-processing in each of the nodes (service exposer "SE" or service requester "SR"). An example of application is the Map of Resource Location "of Energy Management Services" that will be tracked along and among the different levels of the ISA95 / IEC 62264.

Additional details, advantages and characteristics of the invention result not only from the claims but also from the following description.

### BRIEF DESCRIPTION OF THE DRAWINGS

- Fig. 1: shows an architecture of an industrial automation system,
- Fig. 2: shows an architecture of a software component for the resource mapping,
- Fig. 3: shows a procedure and interaction between the elements of the RMC according to Fig. 1,
- Fig. 4: shows a table of possible service interfaces,
- Fig. 5: shows an example of a graphical representation of a resource map,
- Fig. 6: shows an example of a resource map relating energy and transportation of pallets between conveyors,
- Fig. 7: shows an example of a resource map representing all affinities to conveyor Conv1,
- Fig. 8: shows a basic architecture of a SoA-based system and
- Fig. 9: shows a Resource Map of Energy Management Services

### DETAILED DESCRIPTION

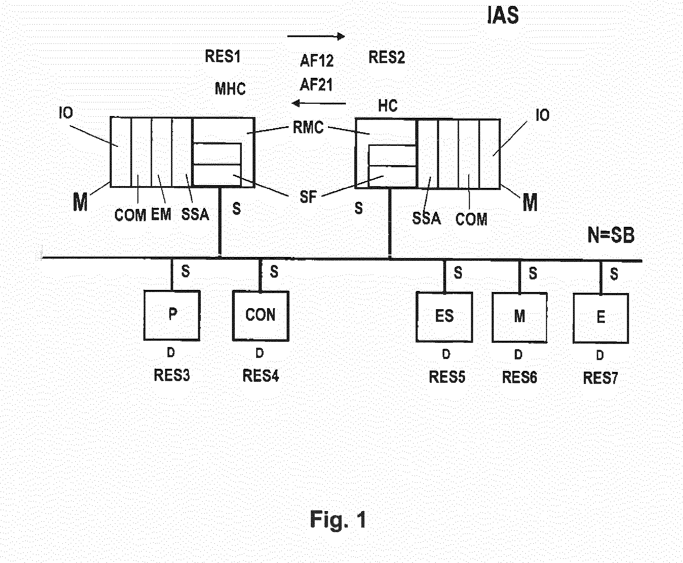

The scope of the invention is a service-oriented architecture applied to an industrial automation system IAS as shown in Fig. 1.

The system IAS is composed of several network-connected devices D. Since the network N can be used by different means, for this invention only the service capabilities of the network N and devices D are considered and that the network N can be any type of the physical layer of an OSI ( Open System Interconnection) model (this means both wired and wireless).

Thus, in this convention the network N referred to as a service bus SB where services S can be exposed and requested by different hosting controllers HC, which serves as a physical container for the software services and the service bus SB serves the purpose for the exchange of information between different endpoints, which are the services exposer SE and their requesters SR.

The hosting controller HC may both expose and request services S. Hosting controllers HC, besides the service capabilities, may also have different modules M for other buses COM and Input/Outputs IO. An example of the hosting controller HC is a Programmable Logic Controller (PLC) with an Ethernet module EM, with a service framework SF to connect to the service bus SB and a CANopen module COM for connecting other equipment E and machinery M to the HC.

In addition and important to this patent application is the notion of resources RES. Resources can be anything in the system IAS that has a quantity for monitoring its activity. For example, resources RES can be the hosting controllers HC, a module M of a hosting controller HC, a service S, a pallet P, a conveyor CON and/or a source of energy ES.

What is considered as a resource RES in the context of this patent application depends always on the use case in which it is applied and where the elements considered as resource have particular property values i.e. current-, voltage-, or energy-values to be monitored. The values are defined by the user. Resources RES must be identified by an unique identifier in the system IAS, i. e. each resource RES must have a different identifier for a concrete time period where an instance of this patent application is used.

For instance, each resource RES has an URI (Uniform Resource Identifiers) that should be associated to it or automatically retrieved. Examples of resources RES and their URIs are a mobile pallet P identified by "rfid:uuid: 550e8400-e29b-41d4-a716-446655440000", a web service S addressed by "http://139.158.104.160/ws/" and a Modbus device D behind a gateway G accessible using "192.168.1.1/rack1.slot2.channels.device3".

Resources RES i. e. Energy Consumption, Bus Type have affinities AF i. e. Energy, Network between each other, meaning that there are one or more properties and property values connecting them. Affinities AFxy, AFyx are always between two resources RESx, RESy: one of them identified by resource origin and the other one by resource destination. There may also be affinities AFxx within a resource RESx itself, i.e. resource origin has the same identifier as resource destination, meaning for example a status of a resource.

An example of an affinity AF12, AF21 would be the bus SB between a Programmable Logic Controller (PLC ) RES1 and a Remote Terminal Unit (RTU) RES2, described by different properties such as bus type and baud rate. Affinities AF are always associated with a timestamp when its properties were last observed. An affinity AF may change its properties at different points in time.

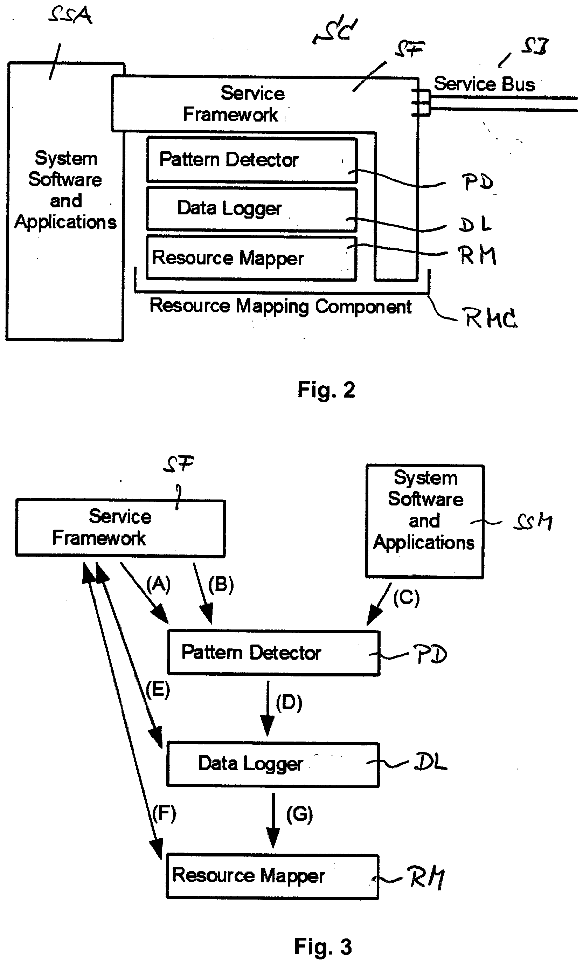

Fig. 2 shows an architecture of a software component SC, implemented in one or more of the hosting controllers HC as explained in the last section. The software component SC contains a Resource Mapping Component RMC and a System Software and Application SSA component. The Resource Mapping Component RMC comprises a Service Framework SF which is connected to the Service Bus SB and to the System Software and Application SSA component. The Service Framework SF includes a Pattern Detector PD, a Data Logger DL and a Resource Mapper RM.

A set of procedures are associated to the elements SF, PD, DL and RM of the RMC as shown in Fig. 3 and listed below.
- (A) Configure patterns list using a dedicated service S
- (B) Detect patterns from services S and
- (C) Detect patterns from system activity and
- (D) Update Data Logger DL
- (E) Update log of Data Logger DL with external information from other RMC or manually using a dedicated service S
- (F) Create/delete resource maps RMAP and share them using a dedicated service S
- (G) Update resource maps RMAP based on the information of the Data Logger DL

The alphabetical numeration doesn't follow a sequence (except where explicitly indicated).

The Service Framework SF serves as an interface that enables sending and receiving service messages. Of course, the Service Framework SF is not an isolated element of the RMC, but it is a system-wide shared element and may include other services than the ones defined for this patent application.

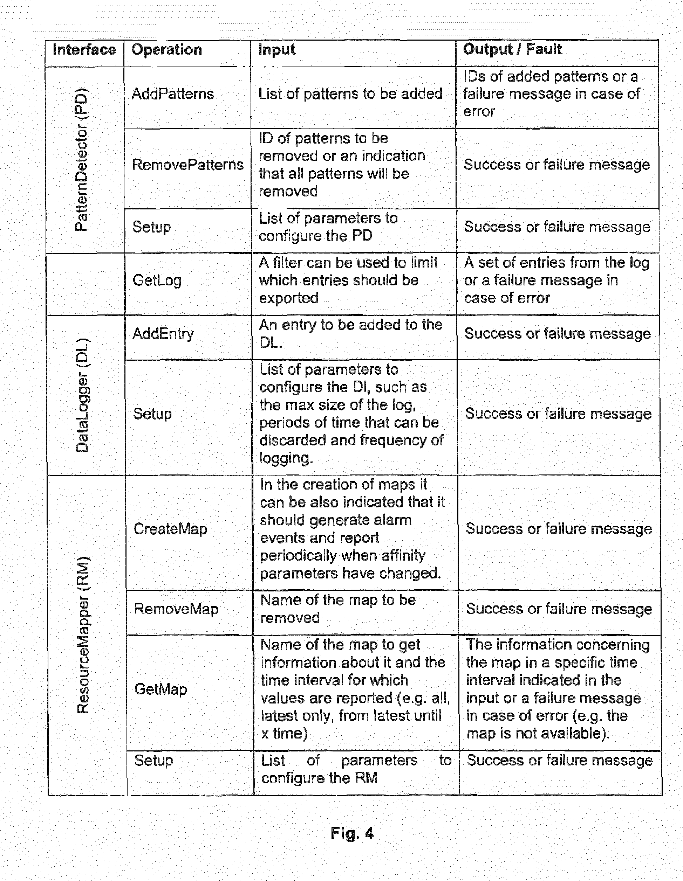

A set of service interfaces SF, PD, DL, RM and their operations is shown in Table of Fig. 4. The Table is a draft that explains the different interfaces and operations similar to the Web Services Description Language 2.0 (WSDL 2.0) but can also be adapted by using other standards such as IDL (Interface Description Language) and WSDL 1.1. Further details are given in the respective subsection where they are used.

The Pattern Detector PD is responsible for monitoring the activity of both the Service Framework SF and the System Software and Application SSA component (procedures (B) and (C)), that means events (affinities) that happen at the service level and events at the system level from the hosting controller HC.

Only a selected list of events is filtered according to the pattern list. An entry on that list indicates a rule for tracking propagated matching events and their affinities. For example there may be an entry indicating only to match service requests from a concrete IP address that corresponds to a given affinity.

A particular language to write pattern entries is not specified in this patent application. It can be any practicable solution. One example is the use of POSIX regular expression for matching events. Important information to detect is the identifier of the resources, the affinity AF, their properties and timestamp.

A pattern entry can be added by using a specific service for that purpose (procedure (A)), namely the operation "AddPattern" of the interface PatternDetector PD. The identifiers of the patterns is then returned by the operation. The same way, patterns can be removed with the operation "RemovePattern", indicating the identifiers of the patterns to be removed. The Data Logger DL can be configured via the "Setup" operation, such as the maximum number of possible patterns, and which running processes of the System Software and Application Component and Service-Framework should be scanned.

The Pattern Detector PD parses the information of matching events/affinities, according to the data model of the Data Logger DL and introduces them into the Data Logger DL (procedure (D)).

The Data Logger DL uses the information parsed from the Pattern Detector PD and introduces it into its data base. The data base is composed of an entry for each matching affinity occurred at a point in time when the timestamp is captured. Each entry has fields according to the following list:
- Entry identifier - A unique identifier assigned to the entry in the data base. It is automatically generated by the Data Logger DL.
- Origin resource - A unique identifier of the resource RES considered as origin of the affinity AF.
- Destination resource - A unique identifier of the resource RES considered as destination of the affinity AF. If origin has the same identifier as destination, it means that the affinity AF is associated to the resource RES itself, indicating a possible state of it.
- Type of affinity AF - Indicates a type of relation between two resources RES1, RES2 that was observed
- Timestamp - The timestamp is the point in time when the affinity AF with the indicated properties P happened. Time should be synchronized between host controllers HS of the system and should be as close as possible to the real event that represents the occurrence of the affinity.
- Hosting controller HC - Address of the hosting controller where the affinity was logged first. When logs are shared between hosting controllers HC, this indicated the hosting controller HC where the entry was first introduced in the Data Logger DL.
- Properties - A list of the triple {name, type, value}. This list describes the properties of an affinity AF for the indicated time instance. The same affinity AF may of course have several entries in the Data Logger DL, where the properties values change according to the time instance they were captured.

The Data Logger DL can also share information from and to external hosting controllers HC using a dedicated interface Data Logger DL and its operation "GetLog" (procedure E).

One approach is that one master hosting controller MHC could ask periodically for logs from other slave hosting controllers HC with the Resource Mapping Component RMC and create resource maps RMAP based on the collected logs from all slaves.

The other approach is that each hosting controller HC with the Resource Mapping Component RMC is responsible for creating their own maps RMAP and pool logs from other hosting controllers HS as needed. Entries in the Data Logger DL corresponding to affinities AF can also be added "manually" or with an external tool by calling the "AddEntry" operation, by passing the entry fields explained above as input for this operation.

The Resource Mapper RM updates one or more maps RMAP that where created by a dedicated service. The resource maps RMAP are constructed based on the information stored on the Data Logger DL (procedure G) and updated periodically.

A resource map RMAP is created by calling the "CreateMap" operation of the Resource Mapper RM interface. The name of the map RMAP, a resource filter indicating which resources to include and a list of affinities to be considered are passed as input data.

In addition, alarms can be defined, e.g. each time the affinity "EnergyProperties" has values above of the threshold, to be sent as events to a registered client, as well as periodically updates when the properties of the affinities in the map have changed.

Maps RMAP can also be removed by a dedicated operation called "RemoveMap". More than one hosting controller HC may share resource maps RMAP when needed to complete their own one by using the "GetMap" operation of other hosting controllers HC.

Once a map RMAP is created, the Resource Mapper RM is responsible to check the Data Logger DL for entries that are relevant to the configuration of the map RMAP. The following procedure is used:
1. Create the first version of the resource map RMAP based on the resource filter RF and types of affinities AF. For each affinity of the map include the latest property values and historical values.
   The latest property values of an affinity between two resources is the most recent value in the Data Logger DL for a given affinity and it should be greater or equal to the current local time of the hosting controller minus a latest threshold value (this latest threshold value prevents that the latest observed values below a threshold are considered as such and put them as history values). If the condition is not met, the latest property values of the affinity are empty. All other values are part of the historical values.
2. Update a resource map RMAP periodically with new information in the Data Logger DL. Replace the latest property values if more recent ones are found and put the replaced ones as history values.
3. Report alarms and send events about the changed properties of affinities (if defined).
4. Go back to Step 2, if no "RemoveMap" operation for the current map was invoked in between.

This procedure is defined for one map, but since a Resource Mapper RM may contain several maps, the procedure is applied individually to all currently active maps in the Resource Mapper RM.

Graphically, a resource map may look like the one in Fig. 4. The alphabetical numeration doesn't follow a sequence (except where explicitly indicated).

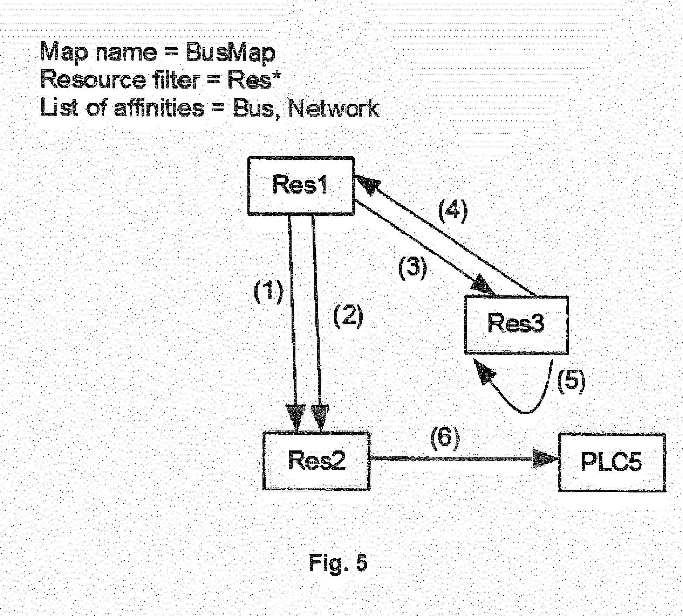

Fig. 5 exemplifies a map with the name BUSMAP that was created to capture the affinities AF between resources RES1, RES2, RES3 filtered using "Res*", indicating that only resources starting with "Res" are considered, concerning bus and network types, as indicated in the list of affinities. Note that resource "PLC5" is also shown because one of the filtered resources has at least one affinity with it.

The information to build the map BUSMAP is captured periodically from the Data Logger DL and shows that there are several relations between the resources RES1, RES2, RES3 concerning the given affinities AF1, AF2. In Fig. 5 are represents six affinities AF1, AF2, AF3, AF4, AF5 and AF6 indicated by arrows. As an example, affinity AF1 is of type "Bus" and has one property indicating that the type of bus is CANopen and is connected according to the latest property values associated to the affinity. It may have also historical values indicating for example that it was disconnected before. The other affinities AF2 - AF6 shown in Fig. 5 can be explained in a similar way, but obviously presenting different values based on the distinguished connections.

There is a lot of flexibility concerning the description of affinities AF, the types of maps to be created and what is the utility of the maps. Each of these subjects is open to the type of final application where the method of the invention is used. The current section resumes some ideas concerning the definition of types and applications on top of the invention. One of them was explained previously in Fig. 5.

Some examples of resource maps that can be created are listed below:
- Physical connectivity map
- Location map
- Energy distribution map
- Service usage map
- Resource hierarchy map
- Functionality layout map
- Safety/security map
- Functional dependencies map
- Service / event propagation map
- Service orchestration map
- Event-processing map

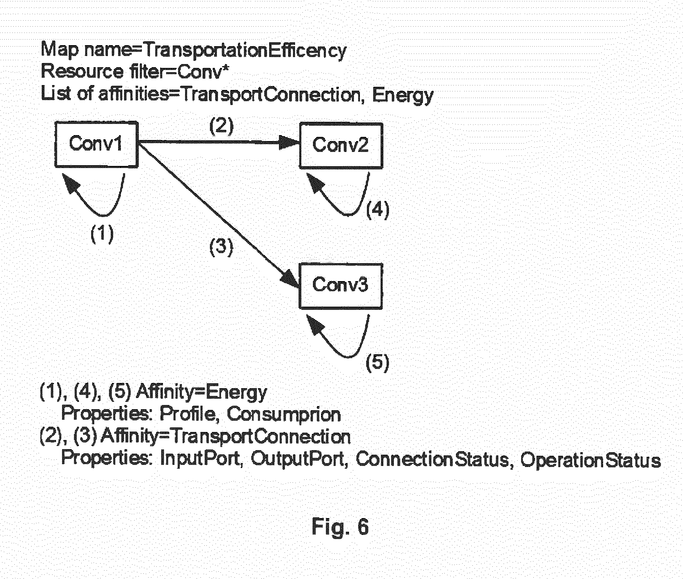

Fig. 6 shows an example of a resource map "Transportation Efficiency Map" TEMAP relating energy and transportation of pallets between conveyors CONV1, CONV2, CONV3. The resource filter is "Conv*" and the list of affinities is "TransportConnection; Energy". The affinities AF1, AF4 and AF5 are Energy-Affinities. The affinities AF2 and AF3 are TransportConnection Affinities. The properties are "InputPort; OutoutPort; ConnectionStatus; OperationStatus"

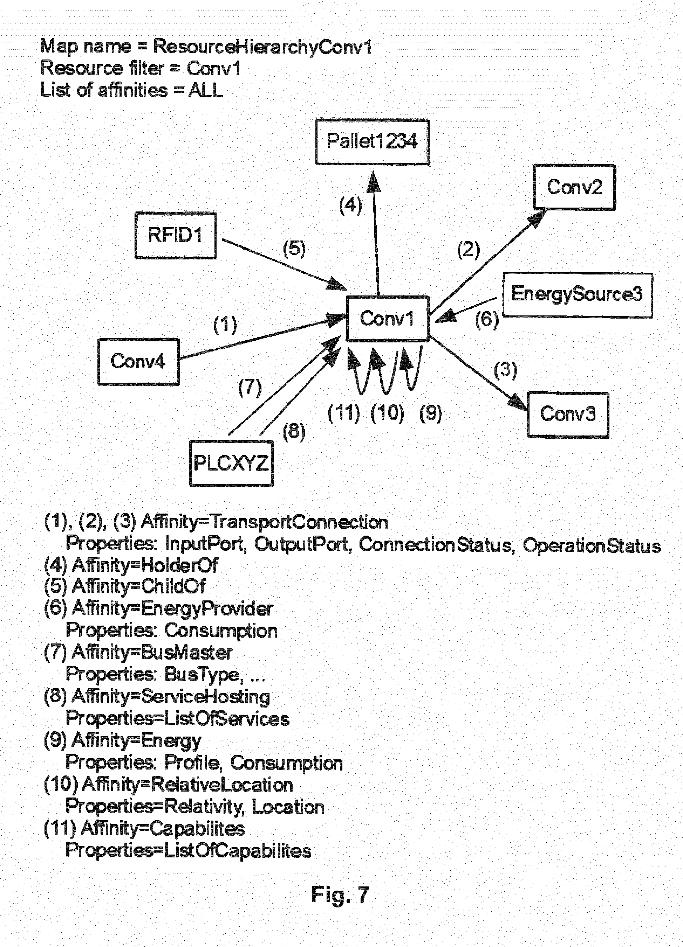

Fig. 7 shows an example of a resource map "ResourceHierarchyConv1" RHC1MAP representing all affinities to conveyor CONV1 with resource filter "Conv1" and list of affinities "ALL" like:

| | |
|---|---|
| AF1, AF2, AF3 | = TransportationConnection; Properties: InputPort; OutputPort; ConnectionStatus; OperationStatus |
| AF4 | = HolderOf |
| AF5 | = ChildOf |
| AF6 | = EnergyProvider; Properties: Consumption |
| AF7 | = BusMaster; Properties: BusType, ... |
| AF8 | = ServiceHosting; Properties: ListOfServices |
| AF9 | = Energy; Properties: Profile, Location |
| AF10 | = RelativeLocation; Properties: Relativity, Location |
| AF11 | = Capabilities; Properties: ListOfCapabilities |

Actually there is a definition from David Luckham, Professor at University of Stanford, about event-driven system in general and a comparison with SOA[http://www.dagstuhl.de/Materials/Files/07/07191/07191.LuckhamDavid.Slides.pdf]. He defines an "Event-driven Architecture as an SOA in which all communication is by events and all services are reactive event processes (i.e. react to input events and produce output events)."

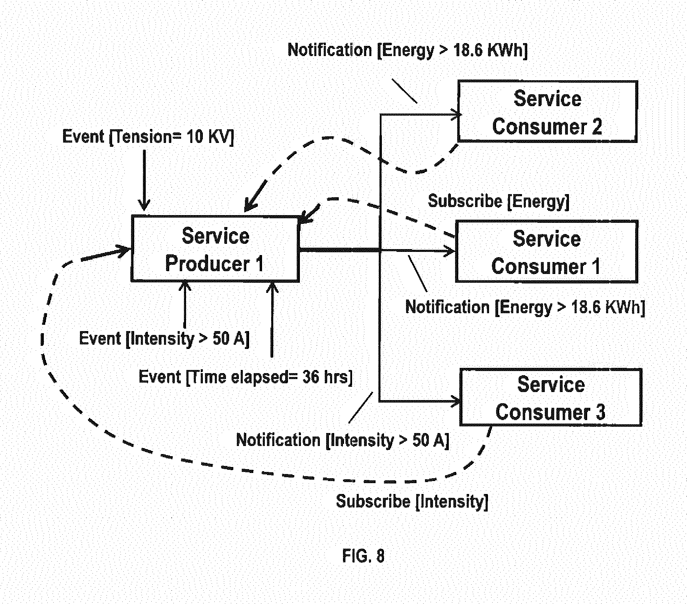

As defined in [G. Mühl, L. Fiege, and P. Pietzuch, Distributed Event-Based Systems. Springer, 2006, p. 395] and shown in Fig. 8, a SoA-based (and naturally event-based system) consist of the following constituents (1) events and (2) notifications as means of communications, producers and consumers as interacting components, and subscriptions signifying a consumer's interest in certain notifications.

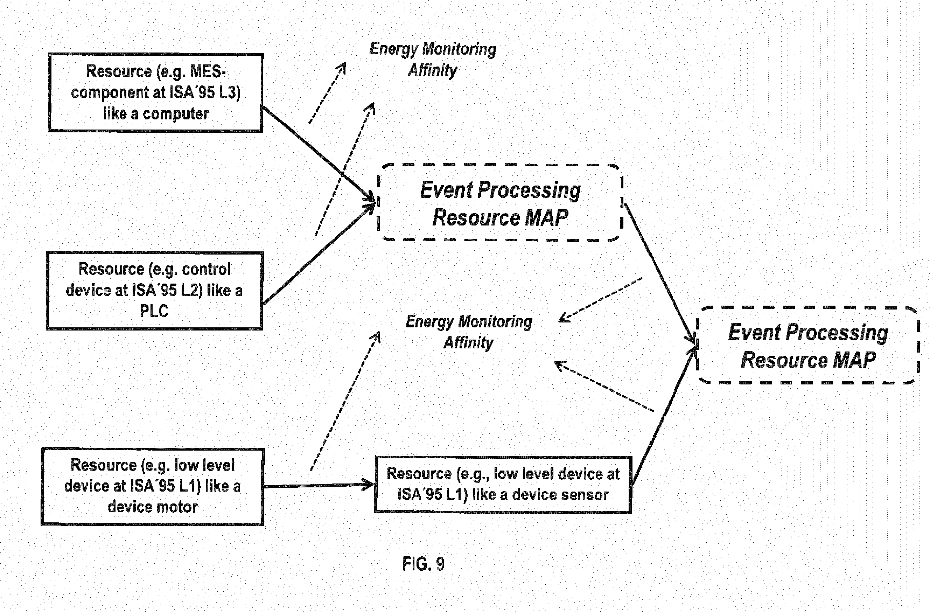

These producers and consumers are located in resources along the enterprise architecture (e.g., ISA'95 architecture) and the subscription and/or use of the services and events will mainly be based on "affinities", which in general define the rules for composing, orchestrating the events and services. The location of the events producers, consumers and their location (resources) will then allow building a complete Cartography in both geographical and temporal domains (as shown in Fig. 9).

Maps are useful for diverse tasks. Some applications to apply maps are for example:
- Path finding
- Energy management: optimize based on a retrieved map
- Detection of errors or unwanted operations
- Determine if some detected affinities are desired and do not compromise the secure/safe state of the system.
- Configuring of connections between resources using e.g. a 3D-design-tool and exported to the RMC.

## Claims

1. Method for generating a representation of resources (RES1 ... RESn) of a service-based industrial automation system (IAS) such as an industrial automation system with an Enterprise Architecture like ISA'95, whereby each resource (RES1 ... RESn) has a unique identifier within the industrial automation system (IAS),
defining of affinities (AF1 ...AFn), whereby each affinity (AF1 ... AFn) is described by at least one property and at least one timestamp,
detecting of the unique identifier of all resources (RES1 ... RESn),
tracking the affinities (AF1 ... AFn) their properties and timestamps and
generating the at least one representation of resources based on the tracked affinities,
**characterized by,**
defining, by an user, an affinity-configuration of affinities (AF1 ... AFn), wherein the affinities (AF1 ... AFn) are relationships associated to structural and functional dependencies between at least two of the resources (RES1 ... RESn) in the system,
monitoring and tracking the affinities (AF1 ... AFn) by means of a Resource Mapping Component (RMC), whereby the affinities (AF1 ... AFn) happen at service level or at system level of a host controller, HC, hosting the Resource Mapping Component (RMC),
wherein the Resource Mapping Component (RMC) comprise a Service Framework (SF) which is connected to a Service Bus (SB) and to a System Software and Application Component (SSA), wherein the Service Framework includes a Pattern Detector (PD), a Data Logger (DL) and a Resource Mapper (RM),
wherein the Pattern Detector (PD) is responsible for monitoring the activity of the Service Framework (SF) and the System Software and Application component (SSA), that means events in form of services that happen at the service level and events that happens at system level from the hosting controller, HC,
wherein only a selected list of events is filtered according to a pattern list and an entry on that list indicates a rule for tracking matching events that corresponds to a given affinity,
wherein the Pattern Detector (PD) parses the information of matching events and their affinities and introduces them into a data base of the Data Logger (DL),
wherein the data base is composed of an entry for each matching event and their affinities occurred at a point in time when the timestamp is captured and
wherein the representation of the resources is constructed in form of a graphical resource map, RMAP, RUSMAP, TEMAP, RHCMAP, based on the information stored in the Data Logger (DL) and the affinity-configuration given by the user.

2. Method according to claim 1,
**characterized by,**
updating a log of the Data Logger (DL) with external information from other Components (RMC),
creating of the at least one resource map, RMAP, and
updating the at least one resource map, RMAP, based on information from the Data Logger (DL).

3. Method according to one of the previous claims,
**characterized by,**
that each entry has fields according to the following list:
∘ Entry identifier - A unique identifier assigned to the entry in the data base, which is automatically generated by the Data Logger.
∘ Origin resource - A unique identifier of the resource (RES) denoting the origin of the affinity (AF).
∘ Destination resource - A unique identifier of the resource (RES) denoting the destination of the affinity (AF);
∘ Type of affinity (AFxy, AFyx) - Indicates a type of relation between two resources (RESx, RESy) that was observed;
∘ Timestamp - Denotes the point of time when the affinity (AF) with the indicated properties happened;
∘ Hosting Controller, HC, - Address of the hosting controller where the affinity was logged first;
∘ Properties - A list of the triples {name, type, value} which describes the properties of an affinity (AF).

4. Method according to one of the previous claims,
**characterized by,**
that the Data Logger (DL) share information from and to an external hosting controller, HC, using a dedicated service interface Data Logger (DL).

5. Method according to one of the previous claims,
**characterized by,**
that a master hosting controller (MHC) ask periodically for logs from the controllers, HC, hosting the Resource Mapping Component (RMC) acting as slave controllers and create resource maps, RMAP, based on the collected logs from all slave controllers and/ or that each slave controller, HC, with the Resource Mapping Component (RMC) is responsible for creating their own maps, RMAP, and pool logs.

6. Method according to one of the previous claims,
**characterized by,**
that the resource mapper (RM) updates the one or more maps, RMAP, periodical.

7. Method according to one of the previous claims,
**characterized by,**
that the name of the resource map, RMAP a resource filter, RF, indicating which resources to include, and a list of affinities (AF1 ... AFn) to be considered are passed as input data and/or that only a selected list of events is filtered according to the list of patterns.

8. Method according to one of the previous claims,
**characterized by,**
that alarms are defined, e.g. each time the affinity "EnergyProperties" has values above of threshold, to be send as events to a registered client as well as periodical updates when the properties of the affinities (AF1 ... AFn) in the map have changed and/or that more than one hosting controllers, HC, shares resource maps, RMAP, when needed to complete their own resource maps by using a "GetMap" operation of other controllers, HC.

9. Method according to one of the previous claims,
**characterized by,**
that the Resource Mapper (RM) is responsible to check the Data Logger (DL) for entries that are relevant to the configuration of the map, RMAP,
the following procedure is used:
a) Create the first version of the at least one resource map, RMAP, based on the resource filter and types of affinities (AF) whereby each affinity of the map includes the latest property values and historical values;
b) Update the at least one resource map, RMAP, periodically with new information in the Data Logger (DL) and replace the latest property values if more recent ones are found and put the replaced ones in the history values;
c) Report alarms and send events about the changed properties of affinities if defined and
d) go back to Step b), if no "RemoveMap" operation for the current map was called in between.

10. Component, HC, for generating a graphical representation of resources (RES1 ... RESn) of a service-based industrial automation system (IAS) such as an industrial automation system with an Enterprise Architecture like ISA'95, adapted to perform a method according to claim 1 to 9.

## Patentansprüche

1. Verfahren zur Erzeugung einer Darstellung von Ressourcen (RES 1 ... RESn) eines service-basierten industriellen Automatisierungssystems (IAS), wie z. B. eines industriellen Automatisierungssystems mit einer Unternehmensarchitektur, wie ISA'95, wobei jede Ressource (RES1 ... RESn) einen eindeutigen Bezeichner innerhalb des industriellen Automatisierungssystems (IAS) hat, umfassend:
die Definition von Affinitäten (AF1 ... AFn), wobei jede Affinität (AF1 ... AFn) durch mindestens eine Eigenschaft und mindestens einen Zeitstempel beschrieben wird,
die Ermittlung der eindeutigen Kennung aller Ressourcen (RES1 ... RESn),
die Verfolgung der Affinitäten (AF1 ... AFn), ihrer Eigenschaften und Zeitstempel und
die Erzeugung der mindestens einen Darstellung von Ressourcen auf der Grundlage der verfolgten Affinitäten,
**gekennzeichnet durch,**
die Definition einer Affinitätskonfiguration von Affinitäten (AF1 ... AFn) durch einen Benutzer, wobei die Affinitäten (AF1 ... AFn) Beziehungen sind, die mit strukturellen und funktionalen Abhängigkeiten zwischen mindestens zwei der Ressourcen (RES1 ... RESn) im System verbunden sind,
die Überwachung und Verfolgung der Affinitäten (AF1 ... AFn) mittels einer Ressourcenabbildungskomponente (RMC), wobei die Affinitäten (AF1 ... AFn) auf Serviceebene oder auf Systemebene eines Host-Controllers, HC, der die Ressourcenabbildungskomponente (RMC) hostet, stattfinden,
wobei die Ressourcenabbildungskomponente (RMC) ein Servicerahmenprogramm (SF) umfasst, das mit einem Service Bus (SB) und einer Systemsoftware- und Anwendungskomponente (SSA) verbunden ist, wobei das Servicerahmenprogramm einen Musterdetektor (PD), einen Datenlogger (DL) und einen Resourcenabbilder (RM) umfasst,
wobei der Musterdetektor (PD) für die Überwachung der Aktivitäten des Servicerahmenprogramms (SF) und der Systemsoftware- und Anwendungskomponente (SSA) zuständig, d. h. für Ereignisse in Form von Services, die auf der Serviceebene stattfinden, und für Ereignisse, die auf der Systemebene des Host-Controllers, HC, stattfinden,
wobei nur eine ausgewählte Liste von Ereignissen nach einer Musterliste gefiltert wird und ein Eintrag in dieser Liste eine Regel zur Verfolgung übereinstimmender Ereignisse angibt, die einer bestimmten Affinität entsprechen,
wobei der Musterdetektor (PD) die Informationen über übereinstimmende Ereignisse und ihre Affinitäten analysiert und sie in eine Datenbank des Datenloggers (DL) einführt,
wobei die Datenbank aus einem Eintrag für jedes übereinstimmende Ereignis und ihren Affinitäten besteht, die zu einem Zeitpunkt auftraten, als der Zeitstempel erfasst wurde, und
wobei die Darstellung der Ressourcen in Form einer grafischen Ressourcenabbildung, RMAP, RUSMAP, TEMAP, RHCMAP, auf der Grundlage der im Datenlogger (DL) gespeicherten Informationen und der vom Benutzer angegebenen Affinitätskonfiguration erstellt wird.

2. Verfahren nach Anspruch 1,
**gekennzeichnet durch,**
die Aktualisierung eines Protokolls des Datenloggers (DL) mit externen Informationen von anderen Komponenten (RMC),
die Erstellung der mindestens einen Ressourcenabbildung, RMAP, und
die Aktualisierung der mindestens einen Ressourcenabbildung, RMAP, auf der Grundlage von Informationen aus dem Datenlogger (DL).

3. Verfahren nach einem der vorhergehenden Ansprüche,
**dadurch gekennzeichnet,**
**dass** jeder Eintrag die in der folgenden Liste aufgeführten Felder enthält:
∘ Eintragskennung - Eine eindeutige Kennung, die dem Eintrag in der Datenbank zugewiesen wird und die automatisch vom Datenlogger generiert wird.
∘ Ursprungsressource - Eine eindeutige Kennung der Ressource (RES), die den Ursprung der Affinität (AF) angibt.
∘ Zielressource - Eine eindeutige Kennung der Ressource (RES), die das Ziel der Affinität (AF) bezeichnet;
∘ Art der Affinität (AFxy, AFyx) - Gibt die Art der Beziehung zwischen zwei Ressourcen (RESx, RESy) an, die beobachtet wurde;
∘ Zeitstempel - Gibt den Zeitpunkt an, zu dem die Affinität (AF) mit den angegebenen Eigenschaften stattgefunden hat;
∘ Hosting Controller, HC, - Adresse des Hosting Controllers, bei dem die Affinität zuerst protokolliert wurde;
∘ Eigenschaften - Eine Liste der Tripel {Name, Typ, Wert}, die die Eigenschaften einer Affinität (AF) beschreiben.

4. Verfahren nach einem der vorhergehenden Ansprüche,
**dadurch gekennzeichnet,**
**dass** der Datenlogger (DL) über eine spezielle Serviceschnittstelle Data Logger (DL) Informationen von und zu einem externen Host-Controller, HC, austauscht.

5. Verfahren nach einem der vorhergehenden Ansprüche,
**dadurch gekennzeichnet,**
**dass** ein Master-Hosting-Controller (MHC) regelmäßig Protokolle von den Controllern, HC, anfordert, die die Ressourcenabbildungskomponente (RMC) beherbergen und als Slave-Controller fungieren, und Ressourcenabbildungen, RMAP, auf der Grundlage der gesammelten Protokolle aller Slave-Controller erstellt und/oder dass jeder Slave-Controller, HC, mit der Ressourcenabbildungskomponente (RMC) für die Erstellung seiner eigenen Abbildungen, RMAP, und Pool-Protokolle verantwortlich ist.

6. Verfahren nach einem der vorhergehenden Ansprüche,
**dadurch gekennzeichnet,**
**dass** der Ressourcenabbilder (RM) die eine oder mehrere Abbildungen, RMAP, regelmäßig aktualisiert.

7. Verfahren nach einem der vorhergehenden Ansprüche,
**dadurch gekennzeichnet,**
**dass** der Name der Ressourcenabbildung, RMAP, ein Ressourcenfilter, RF, der angibt, welche Ressourcen einbezogen werden sollen, und eine Liste der zu berücksichtigenden Affinitäten (AF1 ... AFn) als Eingabedaten übergeben werden und/oder dass nur eine ausgewählte Liste von Ereignissen gemäß der Liste der Muster gefiltert wird.

8. Verfahren nach einem der vorhergehenden Ansprüche,
**dadurch gekennzeichnet,**
**dass** Alarme definiert werden, z. B. jedes Mal, wenn die Affinität "EnergyProperties" Werte oberhalb eines Schwellenwerts aufweist, die als Ereignisse an einen registrierten Client zu senden sind, sowie regelmäßige Aktualisierungen, wenn sich die Eigenschaften der Affinitäten (AF1 ... AFn) in der Abbildung geändert haben, und/oder dass mehr als ein Host-Controller, HC, Ressourcenabbildungen, RMAP, gemeinsam nutzt, wenn dies erforderlich ist, um seine eigenen Ressourcenabbildungen durch Verwendung einer "GetMap"-Operation anderer Controllern, HC, zu vervollständigen.

9. Verfahren nach einem der vorhergehenden Ansprüche,
**dadurch gekennzeichnet,**
**dass** der Resourcenabbilder (RM) die Aufgabe hat, den Datenlogger (DL) auf Einträge zu überprüfen, die für die Konfiguration der Abbildung, RMAP, relevant sind,
wobei das folgende Verfahren angewandt wird:
a) Erstellen der ersten Version der mindestens einen Ressourcenabbildung, RMAP, auf der Grundlage des Ressourcenfilters und der Arten von Affinitäten (AF), wobei jede Affinität der Abbildung die neuesten Eigenschaftswerte und historischen Werte enthält;
b) Aktualisieren der mindestens einen Ressourcenabbildung, RMAP, regelmäßig mit neuen Informationen aus dem Datenlogger (DL) und Ersetzen der letzten Eigenschaftswerte, wenn neuere gefunden werden, und Einsetzen der ersetzten Werte in die Verlaufswerte;
c) Melden von Alarmen und Senden von Ereignissen über die geänderten Eigenschaften von Affinitäten, wenn dies definiert ist, und
d) zurück zu Schritt b), wenn dazwischen keine "RemoveMap"-Operation für die aktuelle Abbildung aufgerufen wurde.

10. Komponente, HC, zum Erzeugen einer grafischen Darstellung von Ressourcen (RES1 ... RESn) eines service-basierten industriellen Automatisierungssystems (IAS), wie z. B. eines industriellen Automatisierungssystems mit einer Unternehmensarchitektur, wie ISA'95, geeignet zum Durchführen eines Verfahrens nach einem der Ansprüche 1 bis 9.

## Revendications

1. Procédé de génération d'une représentation de ressources (RES1...RESn) d'un système d'automatisation industrielle (IAS) basé sur des services tel qu'un système d'automatisation industrielle doté d'une architecture d'entreprise comme ISA'95, chaque ressource (RES 1...RESn) ayant un identifiant unique dans le système d'automatisation industrielle (IAS), le procédé comprenant :
la définition d'affinités (AF1...AFn), chaque affinité (AF1...AFn) étant décrite par au moins une propriété et au moins une estampille temporelle,
la détection de l'identifiant unique de toutes les ressources (RES1...RESn),
le suivi des affinités (AF1...AFn), de leurs propriétés et de leurs estampilles temporelles, et
la génération de l'au moins une représentation de ressources sur la base des affinités suivies,
caractérisé en
la définition, par un utilisateur, d'une configuration d'affinités portant sur des affinités (AF1...AFn), dans lequel les affinités (AF1...AFn) sont des relations associées à des dépendances structurelles et fonctionnelles entre au moins deux des ressources (RES 1...RESn) dans le système,
la surveillance et le suivi des affinités (AF1...AFn) au moyen d'un composant de cartographie de ressources (RMC), les affinités (AF1...AFn) se produisant au niveau services ou au niveau système d'un contrôleur hôte, HC,
l'hébergement du composant de cartographie de ressources (RMC),
dans lequel le composant de cartographie de ressources (RMC) comprend un cadre de services (SF) qui est connecté à un bus de services (SB) et à un composant de logiciels et d'applications système (SSA), dans lequel le cadre de services comprend un détecteur de modèles (PD), un enregistreur de données (DL) et un module de cartographie de ressources (RM),
dans lequel le détecteur de modèles (PD) est chargé de surveiller l'activité du cadre de services (SF) et du composant de logiciels et d'applications système (SSA), à savoir des événements sous la forme de services qui se produisent au niveau services et des événements qui se produisent au niveau système à partir du contrôleur hôte, HC,
dans lequel seule une liste sélectionnée d'événements est filtrée conformément à une liste de modèles et une entrée dans cette liste indique une règle de suivi d'événements concordants qui correspond à une affinité donnée,
dans lequel le détecteur de modèles (PD) analyse les informations d'événements concordants et leurs affinités et les présente à une base de données de l'enregistreur de données (DL),
dans lequel la base de données est composée d'une entrée pour chaque événement concordant et leurs affinités sont survenues à un moment où l'estampille temporelle est capturée, et
dans lequel la représentation des ressources est construite sous la forme d'une carte graphique de ressources, RMAP, RUSMAP, TEMAP, RHCMAP, sur la base des informations stockées dans l'enregistreur de données (DL) et de la configuration d'affinités donnée par l'utilisateur.

2. Procédé selon la revendication 1,
caractérisé en
la mise à jour d'un journal de l'enregistreur de données (DL) avec des informations externes provenant d'autres composants (RMC),
la création de l'au moins une carte de ressources, RMAP, et
la mise à jour de l'au moins une carte de ressources, RMAP, sur la base d'informations provenant de l'enregistreur de données (DL).

3. Procédé selon une des revendications précédentes,
**caractérisé en**
**ce que** chaque entrée comporte des champs conformément à la liste suivante :
o Identifiant d'entrée - Un identifiant unique attribué à l'entrée dans la base de données, qui est généré automatiquement par l'enregistreur de données ;
o Ressource d'origine - Un identifiant unique de la ressource (RES) spécifiant l'origine de l'affinité (AF) ;
o Ressource de destination - Un identifiant unique de la ressource (RES) spécifiant la destination de l'affinité (AF) ;
o Type d' affinité (AFxy, AFyx) - Indique un type de relation entre deux ressources (RESx, RESy) qui a été observé ;
∘ Estampille temporelle - Spécifie le moment où l'affinité (AF) avec les propriétés indiquées s'est produite ;
∘ Contrôleur hôte, HC - Adresse du contrôleur hôte où l'affinité a été recensée la première fois ;
∘ Propriétés - Une liste des triplets {nom, type, valeur} qui décrit les propriétés d'une affinité (AF).

4. Procédé selon une des revendications précédentes,
**caractérisé en**
**ce que** l'enregistreur de données (DL) partage des informations en provenance et à destination d'un contrôleur hôte, HC, externe au moyen d'une interface de service dédiée de l'enregistreur de données (DL).

5. Procédé selon une des revendications précédentes,
**caractérisé en**
**ce que** un contrôleur hôte maître (MHC) demande périodiquement des journaux auprès des contrôleurs, HC, hébergeant le composant de cartographie de ressources (RMC) ayant le rôle de contrôleurs esclaves et crée des cartes de ressources, RMAP, sur la base des journaux collectés auprès de tous les contrôleurs esclaves et/ou **en ce que** chaque contrôleur esclave, HC, doté du composant de cartographie de ressources (RMC) est chargé de créer ses propres cartes, RMAP, et des journaux de groupe.

6. Procédé selon une des revendications précédentes,
**caractérisé en**
**ce que** le module de cartographie de ressources (RM) met à jour les une ou plusieurs cartes, RMAP, de façon périodique.

7. Procédé selon une des revendications précédentes,
**caractérisé en**
**ce que** le nom de la carte de ressources, RMAP, un filtre de ressources, RF, indiquant quelles ressources il faut inclure, et une liste d'affinités (AF1...AFn) à prendre en compte sont transmis à titre de données d'entrée et/ou **en ce que** seule une liste sélectionnée d'événements est filtrée conformément à la liste de modèles.

8. Procédé selon une des revendications précédentes,
**caractérisé en**
**ce que** des alarmes sont définies, par exemple chaque fois que l'affinité "EnergyProperties" présente des valeurs supérieures à un seuil, pour les envoyer à titre d'événements à un client enregistré ainsi que des mises à jour périodiques quand les propriétés des affinités (AF1...AFn) dans la carte ont changé et/ou **en ce que** plusieurs contrôleurs hôte, HC, partagent des cartes de ressources, RMAP, si nécessaire pour compléter leurs propres cartes de ressources en utilisant une opération "GetMap" sur d'autres contrôleurs, HC.

9. Procédé selon une des revendications précédentes,
**caractérisé en**
**ce que** le module de cartographie de ressources (RM) est chargé de vérifier dans l'enregistreur de données (DL) la présence d'entrées qui se rapportent à la configuration de la carte, RMAP, en utilisant la procédure suivante :
a) Créer la première version de l'au moins une carte de ressources, RMAP, sur la base du filtre de ressources et des types d'affinités (AF), chaque affinité de la carte comprenant les dernières valeurs de propriétés et des valeurs anciennes ;
b) Mettre à jour l'au moins une carte de ressources, RMAP, de façon périodique avec de nouvelles informations dans l'enregistreur de données (DL) et remplacer les dernières valeurs de propriétés si des valeurs plus récentes sont découvertes et placer les valeurs remplacées dans les valeurs anciennes ;
c) Signaler des alarmes et envoyer des événements concernant les propriétés modifiées des affinités si elles sont définies, et
d) revenir à l'étape b), si aucune opération "RemoveMap" n'a été appelée entretemps pour la carte actuelle.

10. Composant, HC, pour générer une représentation graphique de ressources (RES1...RESn) d'un système d'automatisation industrielle (IAS) basé sur des services tel qu'un système d'automatisation industrielle doté d'une architecture d'entreprise comme ISA'95, adapté pour mettre en oeuvre un procédé selon les revendications 1 à 9.
